# EUROPÄISCHE PATENTSCHRIFT

(11) **EP 3 335 387 B1**
(45) Veröffentlichungstag und Bekanntmachung des Hinweises auf die Patenterteilung: **15.07.2020**
(21) Anmeldenummer: 17791394.4
(22) Anmeldetag: 30.10.2017
(51) Int. Cl.: H04L 12/40

(54) **VERFAHREN ZUM ÜBERTRAGEN VON DATENPAKETEN ZWISCHEN EINEM ETHERNET UND EINEM BUSSYSTEM IN EINEM KRAFTFAHRZEUG SOWIE GATEWAYVORRICHTUNG UND KRAFTFAHRZEUG**
METHOD FOR TRANSMITTING DATA PACKETS BETWEEN AN ETHERNET AND A BUS SYSTEM IN A MOTOR VEHICLE, AS WELL AS GATEWAY DEVICE AND MOTOR VEHICLE
PROCÉDÉ DE TRANSMISSION DE PAQUETS DE DONNÉES ENTRE UN ETHERNET ET UN SYSTÈME DE BUS DANS UN VÉHICULE AUTOMOBILE, DISPOSITIF PASSERELLE ET VÉHICULE AUTOMOBILE

(30) Priorität: 04.11.2016 DE 102016221690
(43) Veröffentlichungstag der Anmeldung: 20.06.2018
(73) Patentinhaber: Audi AG, 85045 Ingolstadt (DE)
(72) Erfinder: KOLBUS, Philipp, 85049 Ingolstadt (DE); GÖBEL, Joachim, 97222 Rimpar (DE)
(86) Internationale Anmeldenummer: PCT/EP2017/077714
(87) Internationale Veröffentlichungsnummer: WO 2018/083049

(56) Entgegenhaltungen:
- WO-A1-2015/028342
- DE-A1-102007 043 707
- DE-A1-102010 026 433
- DE-A1-102010 030 811

## Beschreibung

Die Erfindung betrifft ein Verfahren zum Übertragen von Datenpaketen zwischen Steuergeräten eines Kraftfahrzeugs. Hierfür sind das Sendegerät und das Empfangsgerät über eine Gatewayvorrichtung gekoppelt. Die Datenpakete werden in einem hybriden Datennetzwerk übertragen, das sowohl zumindest ein Ethernet-Netzwerk als auch zumindest ein Bussystem umfasst. Zu der Erfindung gehören auch die Gatewayvorrichtung sowie das Kraftfahrzeug.

In einem Kraftfahrzeug können zwischen Steuergeräten Datenpakete über ein Bussystem, wie beispielsweise einen CAN-Bus (Controller Area Network) oder FlexRay-Bus, übertragen werden. Solche Bussysteme übertragen die Datenpakete Zeitslot-basiert. Zusätzlich kann in einem Kraftfahrzeug eine paketorientierte Übertragung gemäß dem IP (Internet Protocol) mittels eines Ethernet-Netzwerks oder kurz Ethernet vorgesehen sein. Somit sind also unterschiedliche Transportmechanismen realisiert. Für die Übertragung eines Datenpakets zwischen den unterschiedlichen Transportmechanismen kann eine Gatewayvorrichtung oder kurz ein Gateway vorgesehen sein, welches zwischen den unterschiedlichen Transportmechanismen vermittelt oder Datenpakete zwischen diesen überträgt.

Die Transportmechanismen von Bussystemen wie CAN und Flexray bieten nicht die Möglichkeit, die ein IP-Protokoll (IP - Internet Protocol) in Verbindung mit der zugehörigen Transportschicht (zum Beispiel UDP - User Datagram Protokoll oder TCP - Transport Control Protocol) im Ethernet bietet. Das IP für Ethernet bietet den Vorteil, dass eine eindeutige Adressierung eines Steuergeräts und eine flexible Definition der verwendeten Transportschicht (UDP/TCP) möglich ist und damit auch Anwendungen oder Nutzfunktionen höherer Schichten im ISO/OSI-Referenzmodell (ISO-International Organization for Standardization, OSI- Open Systems Interconnection Model) realisiert werden können.

In Bussystemen ist dagegen vorgesehen, dass ein Steuergerät die für dieses bestimmten Datenpakete immer zu einem vorbestimmten Zeitslot übertragen bekommt oder zuvor durch einen nur für das lokale Bussystem gültigen Identifizierungswert (CAN-ID) zum Empfang eines Datenpakets vorbereitet werden muss.

Eine Beschreibung eines Protokollstacks mit Transportschicht, Netzwerkschicht und Verbindungsschicht ist aus der US 9,154,900 B1 entnehmbar. Die Nutzung einer Netzwerkschicht und einer Verbindungsschicht zum Übertragen von Datenpaketen in einem Bussystem ist auch aus der DE 10 2011 010 400 A1 bekannt. Gateways sind beispielsweise in der EP 2 651 088 A1 beschrieben.

Dokument WO 2015/028342 A1 offenbart ein Steuergerät, das eingerichtet ist, Daten von einem externen Sender über ein Ethernet-Netzwerk zu empfangen, wobei das Steuergerät dazu eine IP- Adresse aufweisen kann und die über das Ethernet-Netzwerk empfangenen Daten an die IP-Adresse des Steuergeräts adressiert sein können. Außerdem kann das Steuergerät eingerichtet sein, eine Diagnose-Nachricht gemäß eines Datenformats zur Übertragung über einen Diagnosebus in eine Ethernet-Nachricht zur Übertragung über das Ethernet-Netzwerk zu packen.

Der Erfindung liegt die Aufgabe zugrunde, in einem Kraftfahrzeug beim Versenden eines Datenpakets dem Sendegerät eine einheitliche Adressierung für Empfangsgeräte bereitzustellen, unabhängig davon , ob das Empfangsgerät über ein Ethernet oder ein Bussystem erreichbar ist.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Gegenstand der Erfindung ist ein Verfahren, welches in einem Kraftfahrzeug das Übertragen von Datenpaketen von einem Sendegerät zu einem Empfangsgerät ermöglicht. Die Datenpakete werden in der beschriebenen Weise über eine Gatewayvorrichtung übertragen. Die Gatewayvorrichtung empfängt hierzu die Datenpakete aus dem Sendegerät über eine erste Datenverbindung. An das Empfangsgerät leitet die Gatewayvorrichtung die Datenpakete über eine zweite Datenverbindung weiter. Eine der Datenverbindungen ist über ein erstes Bussystem auf der Grundlage eines ersten Busprotokolls geführt. Die andere der Datenverbindungen ist entweder als eine Ethernet-Datenverbindung auf der Grundlage eines Internet-Protokolls (IP - Internet Protocol) ausgestaltet oder sie führt über ein zweites Bussystem auf der Grundlage eines zweiten Busprotokolls. Die Ethernet-Datenverbindung basiert insbesondere auf IPv6. Als erstes Bussystem kann insbesondere ein CAN-Bus oder ein FlexRay-Bus vorgesehen sein. Der CAN-Bus kann insbesondere das Busprotokoll CAN-FD aufweisen. Natürlich können auch Bussysteme beider Bustypen an die Gatewayvorrichtung angeschlossen sein, so dass die zweite Datenverbindung über ein zweites Bussystem führen kann, welches dann ebenfalls ein CAN-Bus oder ein Flexray-Bus sein kann und sich von dem ersten Bussystem unterscheiden kann. Damit kann dann eine Bus-zu-Bus-Verbindung auf Basis einer IP-Adressierung ermöglicht sein. Auch eine Verbindung zweier gleichartiger Busse kann ermöglicht werden.

Die Datenpakete des Sendegeräts sind jeweils an eine IP-Adresse adressiert. Vor dem Weiterleiten ersetzt die Gatewayvorrichtung in den Datenpaketen jeweils einen Teil des Datenpakets, der hier als erster Paketteil bezeichnet ist und durch welchen eine Verbindungsschicht der ersten Datenverbindung realisiert ist. Ein solcher Paketteil wird auch als Protokoll-Header bezeichnet. Dieser erste Paketteil oder Header wird durch einen korrespondierenden Paketteil der Verbindungsschicht der zweiten Datenverbindung ersetzt. In einem zweiten Paketteil, durch welchen eine Netzwerkschicht mit der IP-Adresse realisiert ist, behält die Gatewayvorrichtung die IP-Adresse bei. Die Datenpakete werden dann mit der im zweiten Paketteil befindlichen IP-Adresse an das Empfangsgerät weitergeleitet.

Das Verfahren kann sich z.B. auf das Übertragen in Richtung vom Ethernet in ein Bussystem beziehen. Entsprechend empfängt die Gatewayvorrichtung also die Datenpakete aus dem Sendegerät über eine Ethernet-Datenverbindung auf der Grundlage eines Internet-Protokolls (IP - Internet Protocol). An das Empfangsgerät leitet die Gatewayvorrichtung die Datenpakete über ein Bussystem auf der Grundlage eines Busprotokolls weiter. Gemäß dem Verfahren können natürlich auch Datenpakete von Busteilnehmern des Bussystems in die andere Richtung hin zu einem Empfangsgerät im Ethernet gesendet werden. Hierbei kann dann das Sendegerät im Bussystem ebenfalls die IP-Adresse für eine Adressierung nutzen. Auch eine Kombination aus Sendegerät und Empfangsgerät, die beide ausschließlich ein jeweiliges Bussystem nutzen, kann auf Basis der IP-Adresse adressiert werden, da das jeweilige Empfangsgerät auf die IP-Adresse in der beschriebenen Weise dahingehend reagiert, dass es ein Datenpaket mit der IP-Adresse einliest oder akzeptiert.

Das Sendegerät muss dabei nicht berücksichtigen, dass sich das Empfangsgerät in einem Bussystem, also nicht im Ethernet-Netzwerk befindet. Das Sendegerät kann die Datenpakete dennoch jeweils an eine IP-Adresse adressieren. Die Gatewayvorrichtung ersetzt dann in den Datenpaketen jeweils den ersten Paketteil. Denn durch den ersten Paketteil ist eine Verbindungsschicht der Ethernet-Datenverbindung realisiert. Es handelt sich also um denjenigen Paketteil, der im ISO/OSI-Referenzmodell der Sicherungsschicht (Data Link Layer) oder Schicht 2 entspricht. Dieser Paketteil wird durch einen korrespondierenden Paketteil des Busprotokolls ersetzt. Der erste Paketteil wird also z.B. durch ein CAN-Protokoll oder FlexRay-Protokoll ersetzt. Aus dem Ethernet-Datenpaket wird somit ein Bus-Datenpaket.

Dagegen bleibt ein zweiter Paketteil, durch welchen die Netzwerkschicht mit der IP-Adresse realisiert ist, zumindest so erhalten, dass die IP-Adresse beibehalten wird. Das Datenpaket ist also nun ein Bus-Datenpaket und dabei aber weiterhin im zweiten Paketteil an die IP-Adresse adressiert. Die Datenpakete (mit der im zweiten Paketteil befindlichen IP-Adresse) werden dann durch die Gatewayvorrichtung über das Bussystem an das Empfangsgerät weitergeleitet.

Durch die Erfindung ergibt sich der Vorteil, dass das Sendegerät unabhängig vom Zielgerät oder Empfangsgerät dieses jeweils mit einer IP-Adresse adressieren oder erreichen kann, selbst wenn dieses an ein Bussystem angeschlossen ist. Das Empfangsgerät muss jeweils nur im zweiten Paketteil eines Datenpakets prüfen, ob darin seine IP-Adresse angegeben oder enthalten ist, um erkennen zu können, ob es die Daten des Datenpaket verarbeiten soll oder nicht. Somit können im gesamten Kraftfahrzeug-Datennetzwerk auf Basis einer IP-Adressierung Datenpakete zwischen Steuergeräten ausgetauscht oder übertragen oder adressiert werden.

Bevorzugt ist vorgesehen, auch eine Transportschicht bereitzustellen, die das Ethernet und das Bussystem verbindet, also die Möglichkeit bietet, sogenannte Ports bereitzustellen, damit mehrere Software-Applikationen innerhalb des Empfangsgeräts unabhängig voneinander mit einem jeweiligen Sendegerät kommunizieren können. Hierzu werden durch die Gatewayvorrichtung in den Datenpaketen jeweils die Nutzdaten der Transportschicht an die IP-Adresse und einen Port der Transportschicht adressiert und durch das Empfangsgerät über einen Transportschicht-Port empfangen. Ein solcher Port wird auch als Socket bezeichnet.

Für den Fall, dass im Bussystem gemäß dem Busprotokoll, nämlich dem CAN-Protokoll, bereits eine eindeutige Geräte-ID nötig ist, muss zusätzlich zur IP-Adresse noch im ersten Paketteil auf der Ebene der Verbindungsschicht diese Bus-Adresse bereitgestellt werden. Hierzu wird durch die Gatewayvorrichtung jeweils aus der IP-Adresse mittels einer vorbestimmten Zuordnungsvorschrift, zum Beispiel einer Tabelle, eine CAN-ID des Empfangsgeräts ermittelt und dann der ersten Paketteil (Verbindungsschicht) auf der Grundlage der ermittelten CAN-ID gebildet. Somit ist eine automatische Ermittlung der Bus-ID im Bussystem ermöglicht und zwar ausschließlich auf Grundlage der IP-Adresse.

Alternativ dazu kann vorgesehen sein, dass die Datenpakete in dem Bussystem als Broadcast-Datenpakete ausgesendet werden. Beispielsweise können also alle Busteilnehmer im Bussystem (also potentielle Empfangsgeräte) den selben Zeitslot im Bussystem daraufhin überprüfen, ob ein jeweils Datenpaket als Broadcast-Datenpaket an sie gesendet wird. Derjenige Busteilnehmer, der in dem Datenpakete seine IP-Adresse erkennt, kann dann als Empfangsgerät das Datenpaket einlesen oder akzeptieren.

Um die beschriebenen Datenpakete mit IP-Adresse für ein Bussystem zu erzeugen, kann beispielsweise der zweite Paketteil (Netzwerkschicht) auf der Grundlage des Protokolls 6LoWPAN gebildet sein, das dahingehend angepasst werden kann, dass die beschriebenen Eigenschaften damit bereitgestellt werden.

Ein Problem bei der Übertragung von Datenpaketen aus einem Ethernet-Netzwerk in ein Bussystem kann mit der Größe oder dem Datenvolumen der Datenpakete gemäß dem Ethernet-Standards bestehen. Solche Datenpakete können mehr Daten enthalten, also größer sein, als eine maximal zugelassene Paketgröße des Bussystems. Bevorzugt wird deshalb durch die Gatewayvorrichtung eine Paketfragmentierung solcher Datenpakete durchgeführt, falls das Datenpaket größer als eine vorbestimmte Maximalgröße ist. Der Wert der Maximalgröße kann an die maximal zulässige Paketgröße des verwendeten Bussystems angepasst werden. Durch die Paketfragmentierung erfolgt eine Aufteilung des Inhalts oder der Nutzdaten des Datenpakets auf mehrere Datenpakete, die dann in dem Bussystem weitergeleitet werden.

Die beschriebene Gatewayvorrichtung, d.h. das erfindungsgemäße Gateway, kann als Steuergerät ausgestaltet sein, an welches Netzwerkzweige der besagten Netzwerk-Technologien (Ethernet und Bussystem) angeschlossen sein können. Die erfindungsgemäße Gatewayvorrichtung für ein Datennetzwerk eines Kraftfahrzeugs weist zusätzlich eine Prozessoreinrichtung auf, die dazu eingerichtet ist, eine Ausführungsform des erfindungsgemäßen Verfahrens durchzuführen. Die Prozessoreinrichtung kann zumindest einen Mikroprozessor und/oder einen Mikrocontroller aufweisen. Des Weiteren kann ein Programmcode bereitgestellt sein, der dazu eingerichtet ist, bei Ausführen durch die Prozessorvorrichtung die Ausführungsform des erfindungsgemäßen Verfahrens durchzuführen.

Durch die Erfindung ist schließlich auch ein Kraftfahrzeug bereitgestellt, das ein Datennetz aufweist, welches zumindest ein Ethernet und zumindest ein Bussystem umfasst, wobei dann das zumindest eine Ethernet und das zumindest eine Bussystem über eine Gatewayvorrichtung gemäß der Erfindung gekoppelt sind, um zwischen dem zumindest einen Ethernet und dem zumindest einen Bussystem Datenpakete zu übertragen.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs; und
- Fig. 2: ein Diagramm zur Veranschaulichung von Protokollen, mittels welchen Datenpaketen in dem Kraftfahrzeug von Fig. 1 in einem Datennetzwerk übertragen werden können.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

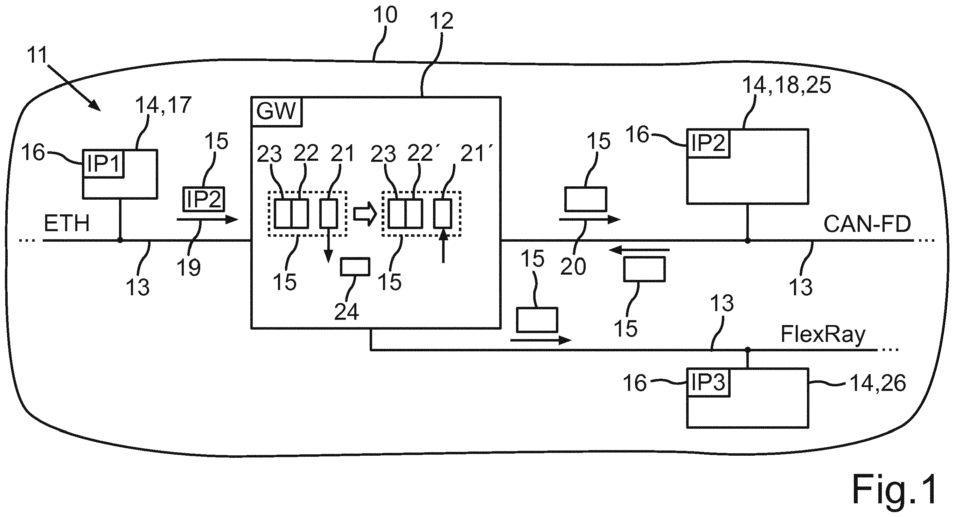

Fig. 1 zeigt ein Kraftfahrzeug 10, bei dem es sich zum Beispiel um einen Kraftwagen, insbesondere einem Personenkraftwagen oder Lastkraftwagen, handeln kann. Im Kraftfahrzeug 10 ist ein Datennetzwerk 11 dargestellt, bei welchem über eine Gatewayvorrichtung oder kurz ein Gateway 12 (GW) mehrere Netzwerkzweige 13 miteinander gekoppelt sein können. Die unterschiedlichen Netzwerkzweige 13 können auf unterschiedlichen Übertragungstechnologien oder Transportmechanismen beruhen, was in Fig. 1 beispielhaft für Ethernet ETH, CAN-Bus CAN-FD und FlexRay-Bus veranschaulicht ist. An die Netzwerkzweige 13 können Steuergeräte 14 angeschlossen sein, die über das Datennetzwerk 11 Datenpakete 15 mit Daten, beispielsweise Sensordaten oder Steuerdaten oder Zustandsdaten, austauschen oder übertragen können. Hierbei können die Steuergeräte 14 den jeweiligen Adressaten oder Empfänger für ein jeweiliges Datenpaket 15 durch eine IP-Adresse 16 angeben. Mit anderen Worten ist jedes Steuergerät 14 durch eine IP-Adresse 16 (IP1, IP2, IP3) in dem Datennetzwerk 11 identifiziert, obwohl Datenzweige 13 auch auf einem Transportmechanismus für ein Bussystem basieren können, wie dies in Fig. 1 für die Datenzweige 13 gemäß CAN-FD und FlexRay veranschaulicht ist.

So ist es zum Beispiel möglich, dass ein Steuergerät 14 des Ethernets als Sendegeräte 17 ein Datenpaket 15 aussendet, das an ein Steuergerät 14 beispielsweise im CAN-Bus adressiert ist, sodass dieses CAN-Steuergerät 14 ein Empfangsgerät 18 darstellt.

Durch das Gateway 12 kann über den Netzwerkzweig 13 des Ethernet ETH das Datenpaket 15, das die IP-Adresse 16 des Empfangsgeräts 18 aufweist (in dem Beispiel: IP2), über eine Ethernet-Datenverbindung 19 empfangen und derart aufbereiten werden, dass es über den Netzwerkzweig 13 gemäß dem Busprotokoll 20 (z.B. CAN-FD) des Netzwerkzweigs 13 des Empfangsgeräts 18 weitergesendet werden kann.

Ein Datenpaket 15 kann hierbei einen Paketteil 21 für die Verbindungsschicht, einen Paketteil 22 für die Netzwerkschicht und einen Paketteil 23 mit weiteren Nutzdaten aufweisen. Der Paketteil 21 ist hierbei spezifisch für den verwendeten Transportmechanismus (ETH, CAN, FlexRay). Dieser kann durch das Gateway 12 für die Weiterleitung ausgetauscht werden. Falls z.B. eine CAN-ID zum Weiterleiten im Bussystem nötig ist, kann diese auf Grundlage der IP-Adresse des Datenpakets 15 aus einer Tabelle 24 ermittelt werden, die somit eine Zuordnungsvorschrift im Sinne der Erfindung darstellt. Somit kann in dem empfangenen Datenpaket 15 der Paketteil 21 entfernt und durch einen buskonformen Paketteil 21' ersetzt werden. Der Paketteil 22 mit der IP-Adresse kann beibehalten werden oder durch einen abgewandelten Paketteil 22' ersetzt werden, der aber ebenfalls die IP-Adressierung mit der IP-Adresse beibehalten kann. Beispielsweise kann ein geänderter Paketteil 22' für die Übertragung in einem Bussystem auf der Grundlage des Protokolls 6LoWPAN gebildet sein. Die Nutzdaten 23 können beibehalten werden.

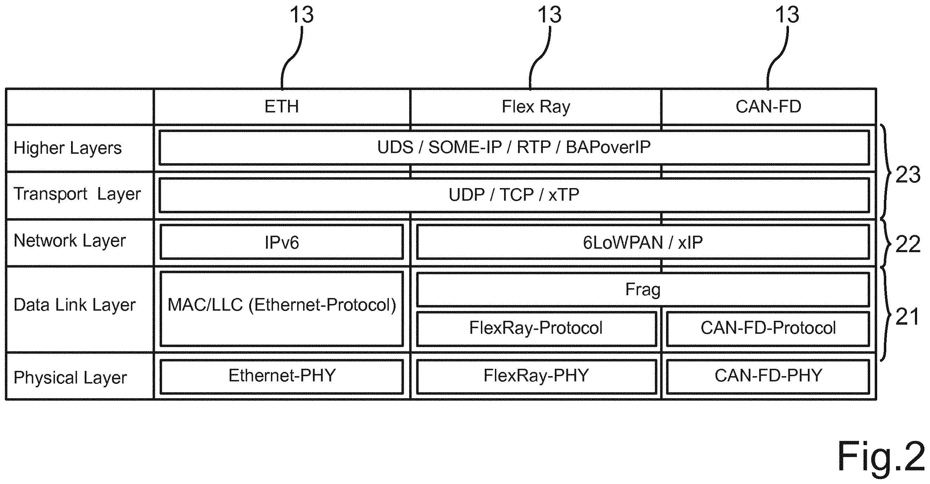

Figur 2 veranschaulicht dies für die Netzwerkzweige 13 auf der Grundlage des ISO/OSI-Referenzmodells anhand der sich ergebenden Protokollstruktur. Mit "Higher Layers" (höhere Schichten) ist hierbei der Anwendungsteil gemeint, also die Software-Anwendungen, durch welche jeweilige Funktionalitäten der Steuergeräte 14 realisiert oder bereitgestellt sind. Die Transportschicht (Transport Layer) des Paketteils 23 mit den Nutzdaten kann unverändert bleiben (durchgängige Schichten). Es kann allerdings für die Nutzdaten 23 eine Fragmentierung Frag vorgesehen werden.

Es muss nicht auf ein bestehendes Protokoll aufgebaut werden, um in den Bussystemen die IP-Adresse 16 verwenden zu können. Es kann auch ein selbst-entwickeltes Protokoll xIP verwendet werden. Zum Bereitstellen einer Transportschicht kann auf bekannte Protokolle (UDP/TCP) oder ein ebenfalls selbst-entwickeltes Protokoll xTP zurückgegriffen werden.

Mittels der Protokollstruktur kann auch ein Steuergerät 14 eines Bussystems als Sendegerät 25 Datenpakete 15 an ein Ethernet-Steuergerät oder ein Empfangsgerät 26 in einem anderen Bussystem oder sogar im selben Bussystem auf Grundlage einer Adressierung mittels der IP-Adresse 16 übertragen. Hierbei kann dann der Paketteil 21 (Data Link Layer) gemäß Fig. 2 ebenfalls an das Ziel-Bussystem angepasst werden.

Somit können also auch Busprotokolle auf Ethernet standardisiert werden und somit Datenpakete flexibel im Kraftfahrzeug 10 übertragen oder ausgetauscht werden. Die Bussysteme CAN-FD und FlexRay werden hierdurch kompatibel mit Ethernet, wodurch sich für die Steuergeräte 14 ein einheitlicher Transportmechanismus ergibt. Im Gateway 12 ergeben sich somit Routing-Mechanismen, die einheitlich für Bussysteme und Ethernet sind. Routingtabellen zum Verwalten oder Ermitteln des Ziel-Netzwerkzweigs 13 basieren auf der Ende-zu-Ende-Adressierung, d.h. der IP-Adresse. Fig. 2 veranschaulicht, dass die Datenteile oder Paketteile der Datenpakete 15 in Paketteile 21, 22, 23 eingeteilt und diese getrennt voneinander behandelt werden können und hierdurch in der beschriebenen Weise ausgetauscht werden können, um ein Datenpaket 15 zwischen unterschiedlichen Netzwerkzweigen 13 weiterleiten zu können.

Durch die Umsetzung eines einheitlichen Netzwerkprotokolls auf Basis von IP-Adressen ergibt sich eine einheitliche Netzwerkschicht für Bussysteme CAN-FD und FlexRay und ein Ethernet. Insbesondere ist hierbei vorgesehen, die Protokollvariante IPv6 zu verwenden, die im Ethernet weiter unabhängig verwendet werden kann. Da dieses Protokoll mit 40 Byte einen zu großen Overhead für zum Beispiel CAN-FD (maximal 64 Byte Gesamt-Paketgröße) mit sich bringt, kann hier eine komprimierte Version von IPv6 bereitgestellt werden. Dies kann beispielsweise auf der Grundlage von 6LoWPAN geschehen, das eine solche Komprimierung ermöglicht. Weiterhin kann eine Fragmentierung Frag unterhalb der Netzwerkschicht gemäß Fig. 2 vorgesehen werden, um die von IPv6 geforderte MTU (Maximum Transfer Unit) von 1280 Byte realisieren zu können. Die Fragmentierung, wie sie durch 6LoWPAN bereitgestellt ist, eignet sich dabei aber nicht für CAN-FD oder FlexRay. Deshalb ist die Fragmentierung Frag in der Verbindungsschicht 21 vorgesehen. Oberhalb der Netzwerkschicht kann für die Verarbeitung der Nutzdaten 23 ein beliebiges Transportprotokoll busübergreifend die Steuergeräte 14 aller Netzwerkzweige 13 logisch verbinden.

Durch das Beispiel ist gezeigt, wie durch die Erfindung ein busübergreifender Transportmechanismus auf der Grundlage von IPv6 bereitgestellt werden kann.

## Patentansprüche

1. Verfahren zum Übertragen von Datenpaketen (15) von einem Sendegerät (17) zu einem Empfangsgerät (18) in einem Kraftfahrzeug (10), wobei die Datenpakete (15) über eine Gatewayvorrichtung (12) übertragen werden und hierbei die Gatewayvorrichtung (12) die Datenpakete (15) aus dem Sendegerät (17) über eine erste Datenverbindung (19) empfängt und an das Empfangsgerät (18) eine zweite Datenverbindung weiterleitet,
**dadurch gekennzeichnet, dass**
eine der Datenverbindungen über ein erstes Bussystem (CAN-FD, Flexray) auf der Grundlage eines ersten Busprotokolls (20) führt und die andere der Datenverbindungen eine Ethernet-Datenverbindung auf der Grundlage eines Internet-Protokolls (IP) ist oder über ein zweites Bussystem (CAN-FD, Flexray) auf der Grundlage eines zweiten Busprotokolls (20) führt und dass
die Datenpakete (15) des Sendegeräts (17) jeweils an eine IP-Adresse (16) adressiert sind und die Gatewayvorrichtung (12) in den Datenpaketen (15) jeweils einen ersten Paketteil (21), durch welchen eine Verbindungsschicht der ersten Datenverbindung (19) realisiert ist, durch einen korrespondierenden Paketteil (21') der Verbindungsschicht des zweiten Datenverbindung ersetzt und in einem zweiten Paketteil (22), durch welchen eine Netzwerkschicht mit der IP-Adresse (16) realisiert ist, die IP-Adresse (16) beibehält, und die Datenpakete (15) mit der im zweiten Paketteil (22) befindlichen IP-Adresse (16) an das Empfangsgerät (18) weiterleitet.

2. Verfahren nach Anspruch 1, wobei das Bussystem ein CAN-Bus oder eine Flexray-Bus ist.

3. Verfahren nach einem der vorhergehenden Ansprüche, wobei das Bussprotokoll (20) ein CAN-Protokoll oder Flexray-Protokoll ist.

4. Verfahren nach einem der vorhergehenden Ansprüche, wobei in den Datenpaketen (15) jeweils enthaltene Nutzdaten (23) einer Transportschicht an die IP-Adresse (16) und einen Port der Transportschicht adressiert sind und durch das Empfangsgerät (18) über einen Transportschicht-Port empfangen werden.

5. Verfahren nach einem der vorhergehenden Ansprüche, wobei durch eine Gatewayvorrichtung (12) zum Weiterleiten jedes Datenpakets (15) jeweils aus der IP-Adresse (16) des zweiten Paketteils (22) mittels einer vorbestimmten Zuordnungsvorschrift (24) eine CAN-ID des Empfangsgeräts (18) ermittelt und der erste Paketteil (21') auf der Grundlage der ermittelten CAN-ID gebildet wird.

6. Verfahren nach einem der Ansprüche 1 bis 4, wobei die Datenpakete (15) durch die Gatewayvorrichtung (12) in dem Bussystem als Broadcast-Datenpakete ausgesendet werden.

7. Verfahren nach einem der vorhergehenden Ansprüche, wobei der zweite Paketteil (22) gemäß dem Protokoll 6LoWPAN für die Übertragung im Bussystem umgebildet wird.

8. Verfahren nach einem der vorhergehenden Ansprüche, wobei die Gatewayvorrichtung (12) eine Paketfragmentierung (Frag) solcher Datenpakete (15) durchführt, die größer als eine vorbestimmte Maximalgröße sind.

9. Gatewayvorrichtung (12) für ein Datennetzwerk (11) eines Kraftfahrzeugs (10), wobei die Gatewayvorrichtung (12) eine Prozessoreinrichtung aufweist, die dazu eingerichtet ist, ein Verfahren nach einem der vorhergehenden Ansprüche durchzuführen.

10. Kraftfahrzeug (10) mit einem Datennetzwerk (11), das zumindest ein Ethernet (ETH) und zumindest ein Bussystem (CAN-FD, Flexray) aufweist, wobei das zumindest eine Ethernet (ETH) und das zumindest eine Bussystem (CAN-FD, Flexay) über eine Gatewayvorrichtung (12) nach Anspruch 9 zur Übertragung von Datenpaketen (15) gekoppelt sind.

## Claims

1. Method for transmitting data packets (15) from a transmitter device (17) to a receiver device (18) in a motor vehicle (10), wherein the data packets (15) are transmitted via a gateway device (12) and, in this way, the gateway device (12) receives the data packets (15) from the transmitter device (17) via a first data connection (19) and forwards a second data connection to the receiver device (18),
**characterised in that**
one of the data connections leads via a first bus system (CAN-FD, Flexray) on the basis of a first bus protocol (20) and the other of the data connections is an ethernet data connection on the basis of an Internet protocol (IP) or leads via a second bus system (CAN-FD, Flexray) on the basis of a second bus protocol (20) and that
the data packets (15) of the transmitter device (17) are each addressed to an IP address (16) and, in the data packets (15), the gateway device (12) replaces a respective first packet part (21), via which a link layer of the first data connection (19) is achieved, with a corresponding packet part (21') of the link layer of the second data connection, and retains the IP address (16) in a second packet part (22) via which a network layer is achieved with the IP address (16), and forwards the data packets (15) with the IP address (16) found in the second packet part (22) to the receiver device (18).

2. Method according to claim 1, wherein the bus system is a CAN bus or a Flexray bus.

3. Method according to any one of the preceding claims, wherein the bus protocol (20) is a CAN protocol or Flexray protocol.

4. Method according to any one of the preceding claims, wherein payload (23) of a transport layer contained respectively in the data packets (15) is addressed to the IP address (16) and a port of the transport layer and is received by the receiver device (18) via a transport layer port.

5. Method according to any one of the preceding claims, wherein a CAN ID of the receiver device (18) is determined by a gateway device (12) for forwarding of each data packet (15) respectively from the IP address (16) of the second packet part (22) by means of a predetermined assignment rule (24) and the first packet part (21') is formed on the basis of the determined CAN ID.

6. Method according to any one of claims 1 to 4, wherein the data packets (15) are transmitted as broadcast data packets by the gateway device (12) in the bus system.

7. Method according to any one of the preceding claims, wherein the second packet part (22) is transformed in accordance with the protocol 6LoWPAN for transmission in the bus system.

8. Method according to any one of the preceding claims, wherein the gateway device (12) performs a packet fragmentation (frag) of such data packets (15) that are larger than a predetermined maximum size.

9. Gateway device (12) for a data network (11) of a motor vehicle (10), wherein the gateway device (12) has a processor device configured to perform a method according to any one of the preceding claims.

10. Motor vehicle (10) with a data network (11) having at least one ethernet (ETH) and at least one bus system (CAN-FD, Flexray), wherein the at least one ethernet (ETH) and the at least one bus system (CAN-FD, Flexay) are coupled via a gateway device (12) according to claim 9 for the transmitting of data packets (15).

## Revendications

1. Procédé de transmission de paquets de données (15) d'un dispositif d'émission (17) à un dispositif de réception (18) dans un véhicule automobile (10), les paquets de données (15) étant transmis par l'intermédiaire d'un dispositif passerelle (12), le dispositif passerelle (12) recevant les paquets de données (15) en provenance du dispositif d'émission (17) par l'intermédiaire d'une première liaison de données (19) et les transmettant au dispositif de réception (18) par l'intermédiaire d'une deuxième liaison de données,
**caractérisé en ce que**
l'une des liaisons de données passe par un premier système de bus (CAN-FD, Flexray) basé sur un premier protocole de bus (20) et l'autre des liaisons de données est une liaison de données Ethernet basée sur un protocole Internet (IP) ou passe par un deuxième système de bus (CAN-FD, Flexray) basé sur un deuxième protocole de bus (20) et que
les paquets de données (15) du dispositif d'émission (17) sont respectivement adressés à une adresse IP (16) et le dispositif passerelle (12) remplace dans les paquets de données (15) respectivement une première partie de paquet (21), au moyen de laquelle une couche de liaison de la première liaison de données (19) est mise en œuvre, par une partie de paquet correspondante (21') de la couche de liaison de la deuxième liaison de données, et conserve l'adresse IP (16) dans une deuxième partie de paquet (22), au moyen de laquelle une couche réseau avec l'adresse IP (16) est mise en œuvre, et transmet les paquets de données (15) avec l'adresse IP (16) se trouvant dans la deuxième partie de paquet (22) au dispositif de réception (18).

2. Procédé selon la revendication 1, dans lequel le système de bus est un bus CAN ou un bus Flexray.

3. Procédé selon l'une quelconque des revendications précédentes, dans lequel le protocole de bus (20) est un protocole CAN ou un protocole Flexray.

4. Procédé selon l'une quelconque des revendications précédentes, dans lequel les données utilisateur (23) d'une couche de transport contenues respectivement dans les paquets de données (15) sont adressées à l'adresse IP (16) et à un port de la couche de transport et sont reçues par le dispositif de réception (18) par l'intermédiaire d'un port de la couche de transport.

5. Procédé selon l'une quelconque des revendications précédentes, dans lequel un CAN ID du dispositif de réception (18) est déterminé par un dispositif passerelle (12) pour la transmission de chaque paquet de données (15) à partir de l'adresse IP (16) de la deuxième partie de paquet (22) au moyen d'une règle d'affectation prédéterminée (24) et la première partie de paquet (21') est formée sur la base du CAN ID déterminé.

6. Procédé selon l'une quelconque des revendications 1 à 4, dans lequel les paquets de données (15) sont envoyés par le dispositif passerelle (12) dans le système de bus en tant que paquets de données de diffusion.

7. Procédé selon l'une quelconque des revendications précédentes, dans lequel la deuxième partie de paquet (22) est convertie conformément au protocole 6LoWPAN pour la transmission dans le système de bus.

8. Procédé selon l'une quelconque des revendications précédentes, dans lequel le dispositif passerelle (12) effectue une fragmentation de paquets (Frag) de tels paquets de données (15) qui sont plus grands qu'une taille maximale prédéterminée.

9. Dispositif passerelle (12) pour un réseau de données (11) d'un véhicule automobile (10), le dispositif passerelle (12) ayant un dispositif de processeur qui est configuré pour exécuter un procédé selon l'une quelconque des revendications précédentes.

10. Véhicule automobile (10) avec un réseau de données (11) qui comporte au moins un Ethernet (ETH) et au moins un système de bus (CAN-FD, Flexray), l'au moins un Ethernet (ETH) et l'au moins un système de bus (CAN-FD, Flexray) étant couplés par l'intermédiaire d'un dispositif passerelle (12) selon la revendication 9 pour la transmission de paquets de données (15).
